# EUROPEAN PATENT SPECIFICATION

(11) **EP 3 166 302 B1**
(45) Date of publication and mention of the grant of the patent: **05.06.2019**
(21) Application number: 15815030.0
(22) Date of filing: 17.04.2015
(51) Int. Cl.: H04N 5/225, B60R 1/00, G01C 21/26, H04N 5/232, H04N 17/00

(54) **VEHICLE-MOUNTED IMAGING DEVICE**
FAHRZEUGMONTIERTE BILDGEBUNGSVORRICHTUNG
DISPOSITIF D'IMAGERIE MONTÉ SUR VÉHICULE

(30) Priority: 01.07.2014 JP 2014136077
(43) Date of publication of application: 10.05.2017
(73) Proprietor: Clarion Co., Ltd., Saitama-shi, Saitama 330-0081 (JP)
(72) Inventor: IRIE, Kota, Saitama-shi Saitama 330-0081 (JP); FUKUDA, Daisuke, Saitama-shi Saitama 330-0081 (JP); ITO, Kazuhiko, Saitama-shi Saitama 330-0081 (JP)
(74) Representative: Glawe, Delfs, Moll
(86) International application number: PCT/JP2015/061832
(87) International publication number: WO 2016/002308

(56) References cited:
- EP-A2- 1 826 648
- JP-A- 2006 229 341
- JP-A- 2010 273 014
- JP-A- 2011 153 961

## Description

### Technical Field

The present invention relates to a vehicle-mounted imaging device that has a function of sensing an accretion such as water droplets and contamination which have accreted on the surface of an objective lens of a camera or on the surface of a protective member of the objective lens that is mounted on a mobile body which runs in an outdoor environment, and of notifying a user of the mobile body of the sensed accretion.

### Background Art

As an imaging device for a vehicle, which is provided with a small-sized camera so as to check the periphery of a vehicle, for instance, a back monitor device is conventionally known (for instance, see Patent Literature 1).

The vehicle-mounted camera is usually installed on the outside of the vehicle, and accordingly a video image occasionally becomes unclear due to contamination on the surface of a lens of a camera and the like.

In order to solve this problem, the imaging device determines the presence or absence of the contamination on the lens in the camera on the basis of the image, and when the determination is "presence of contamination", notifies a user in the vehicle of the existence of the contamination, by displaying the presence of the contamination on a display unit of a meter panel, and/or outputting a synthetic voice or the like from a speaker.

In addition, as for a technology which considers when and at what timing a device notifies a user of the existence of the contamination on the lens, the device is known which informs the user that there is the accretion on the lens of the camera, when the user is outside of the vehicle (for instance, see Patent Literature 2).

The device is configured to display an image that has been imaged by a camera, by utilizing image display means (for instance, liquid display device) which is provided in a portable device of the user, when having determined that the user is outside of the vehicle, and enables the user herself to visually check that there is the accretion on the lens of the camera, by viewing the image. EP1826648 discloses contamination diagnosis and removal for a vehicle camera. The driver is notified about the contamination. It also discloses a navigation function with a map for parking support. JP2011153961 discloses navigating a vehicle to a facility using a map and notifying the driver about the facility.

### Citation List

### Patent Literature

Patent Literature 1: Japanese Patent Laid-Open No. 2007-318355
Patent Literature 2: Japanese Patent Laid-Open No. 2012-106557

### Summary of Invention

### Technical Problem

Like Patent Literature 1, when the imaging device only notifies the user of the existence of the contamination of the camera, there is a case where the user feels bothered by the notification or forgets the notification, because the user is not necessarily in a situation in which the user can eliminate the contamination of the camera depending on the place and timing.

In addition, like Patent Literature 2, when the device which informs notifies the user outside of the vehicle of the contamination of the camera, the user needs to always have the portable device, and furthermore the ECU of the camera needs to have a communication function with the portable device, which makes the system complicated and also causes such a problem that the cost increases.

The present invention is invented with respect to the above described problems, and is directed at providing a vehicle-mounted imaging device which can notify a user that it is necessary to eliminate contamination on a camera, in a place such as a service station and a home parking lot in which it is easy for the user to eliminate the contamination of the camera, and besides in a state in which the user is in the vehicle.

### Solution to Problem

This object is achieved by an imaging device according to claim 1; the dependent claims are related to further developments of the invention.

According to the invention, the vehicle-mounted imaging device can notify the user that the lens or the protective member of the lens is contaminated, in an environment or the vicinity thereof, in which fixtures (for instance, washing brush, sponge, dust cloth and the like) for eliminating the contamination thereby that has been accreted on the lens of the camera or the protective member of the lens are arranged, and accordingly alleviates the intrusiveness due to the notification; and the user can effectively eliminate the contamination on the lens of the camera or the protective member of the lens. Furthermore, there is a high possibility that the user notices that the camera is contaminated when arriving at the predetermined type of the facility and getting off from the vehicle, which can accordingly make the user resist forgetting a contamination eliminating action.

In addition, it is notified by the display device and/or the speaker device provided in the vehicle that the lens or the protective member of the lens is contaminated; accordingly a conventional portable device is not necessary; and furthermore, the imaging device uses devices provided in the vehicle as the display device and the speaker device, accordingly the imaging device can be simplified and its cost reduced.

In addition, the vehicle-mounted imaging device can easily search a predetermined type of facility due to the vehicle position identifying unit, which makes it possible to quickly eliminate the contamination.

Furthermore , the vehicle-mounted imaging device may be configured so as not to notify the user that the lens or the protective member of the lens is contaminated, when a wiper for a windshield provided in the vehicle is continuously operated. According to this configuration, the vehicle-mounted imaging device determines that there is a high possibility that the contamination on the lens or the protective member of the lens continues because it is a rain fall state, on the basis that the wiper for the windshield continuously operates, and can avoid useless notification.

In addition, the vehicle-mounted imaging device may be configured so as to change a set value of a monitoring time period during which the vehicle-mounted imaging device monitors the change of the contamination level, according to the type of the contamination on the lens or the protective member of the lens. According to this configuration, the vehicle-mounted imaging device can efficiently perform notification of the contamination.

In addition, the set value of the monitoring time period may be set at a short time period, when the type of the contamination is an accretion having low transmission, and may be set at a long time period when the type of the contamination is an accretion having high transmission or is cloudiness. According to this configuration, the vehicle-mounted imaging device sets the monitoring time period to be short, when the type of the contamination is the accretion having the low transmission, because such a possibility is low that the transmission is recovered, and thereby can quickly notify the user of the contamination. In addition, the vehicle-mounted imaging device sets the monitoring time period to be long, when the type of the contamination is the accretion having the high transmission or is the cloudiness, because such a possibility is high that the transmission is recovered, and thereby can cancel the notification of the contamination after the transmission has been surely recovered.

The present invention includes: an accretion diagnosis unit that diagnoses a state of contamination which has been accreted on a lens of a camera that is mounted on the outside of a vehicle, or on a protective member of the lens;; and a contamination notification determination unit that determines the presence or absence of a notification of contamination, on the basis of positional information on a predetermined type of facility that is a previously determined facility in a navigation device having a vehicle position identifying unit that identifies a position of the vehicle and a database containing a map and peripheral facility information, and in which the contamination can be eliminated, and on the vehicle, wherein when it is determined by the accretion diagnosis unit that a contamination level of the lens of the camera or the protective member of the lens is a predetermined value or higher, a route to a destination is set by the navigation device, and it has been determined by the contamination notification determination unit that the facility exists in a predetermined distance range from the route, the vehicle-mounted imaging device notifies the user that the lens of the camera or the protective member of the lens is contaminated, by the display device and/or the speaker device provided in the vehicle, and displays a candidate of the facility on the display device. Accordingly, the vehicle-mounted imaging device can notify the user that the lens or the protective member of the lens is contaminated, in an environment or the vicinity thereof, in which fixtures (for instance, washing brush, sponge, dust cloth, bucket and the like) for eliminating the contamination thereby that has been accreted on the lens of the camera or the protective member of the lens, and facility such as a faucet are arranged, and accordingly alleviates the intrusiveness due to the notification; and the user can effectively eliminate the contamination on the lens of the camera or the protective member of the lens. Furthermore, there is a high possibility that the user notices that the camera is contaminated when arriving at the predetermined type of the facility and getting off from the vehicle, which can accordingly make the user resist forgetting a contamination eliminating action.

In addition, it is notified by the display device and/or the speaker device provided in the vehicle that the lens or the protective member of the lens is contaminated; accordingly the crew can receive the notification in a state of being in the vehicle, and does not need a conventional portable device; and furthermore, the imaging device uses devices provided in the vehicle as the display device and the speaker device, accordingly the imaging device can be simplified and its cost reduced.

In addition, the vehicle-mounted imaging device can easily search a predetermined type of facility by utilizing a route guide of the navigation device, which makes it possible to quickly eliminate the contamination.

### Brief Description of Drawings

Figure 1 is a block diagram showing an imaging device of the present invention.
Figure 2 is a flow chart showing various processes of the imaging device.
Figure 3 is a flow chart showing contamination determination processing of the imaging device.
Figure 4 is a flow chart showing contamination notification processing 1 of the imaging device.
Figure 5 is a flow chart showing contamination notification processing 2 of the imaging device.
Figure 6 is a flow chart showing wiping diagnosis processing of the imaging device.
Figure 7 is a graph showing a temporal change of a contamination level of a lens or a protective glass of a camera, and a threshold.
Figures 8A and 8B is an explanatory view for describing a display device and a speaker device which performs a notification of the contamination; Figure 8A is a view showing a meter panel; and Figure 8B is a view showing display on a display of a navigation device.
Figure 9 is an explanatory view showing a diagnosis procedure for a contamination state of the lens or the protective glass, by comparison between images.

### Description of Embodiments

One embodiment of the present invention will be described below with reference to the drawings.

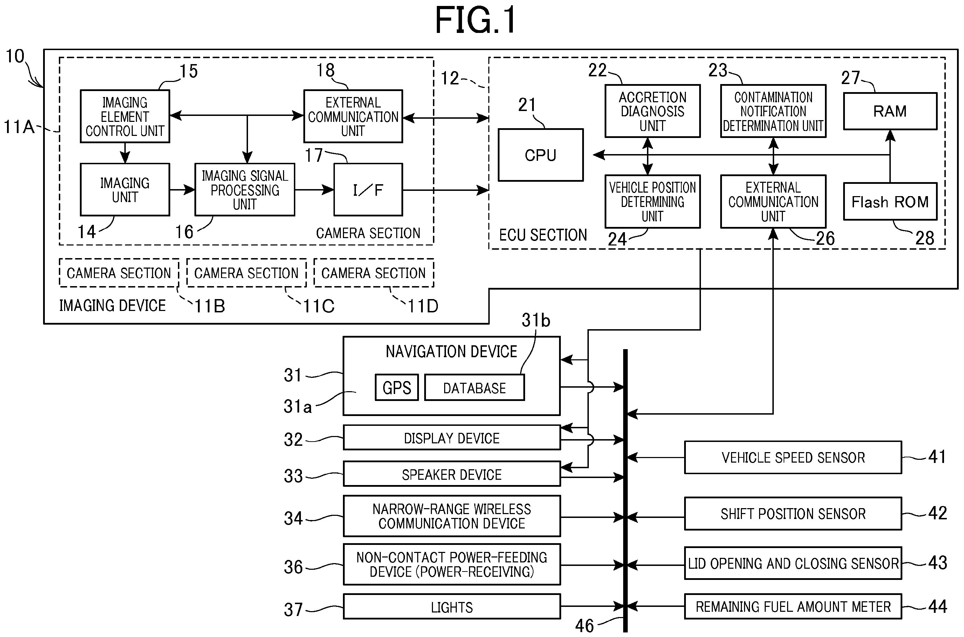

Figure 1 is a block diagram showing an imaging device 10 of the present invention.

The imaging device 10 includes: a plurality of camera sections 11A, 11B, 11C and 11D which image the periphery of a vehicle; and an ECU (Electronic Control Unit) section 12 which performs control for notifying a crew of contamination states of the camera sections 11A, 11B, 11C and 11D on the basis of the images which have been imaged by the plurality of camera sections 11A, 11B, 11C and 11D.

The camera section 11A includes: an imaging unit 14 that is formed of an imaging element which converts light that has passed through a lens into an electric signal; an imaging element control unit 15 that controls the imaging unit 14; a video image signal processing unit 16 that converts the signal which has been output from the imaging unit 14 into a video image signal, according to a control signal which has been output from the imaging element control unit 15; an I/F (interface) 17 which connects between the video image signal processing unit 16 and the ECU section 12 so that the video image signal processing unit 16 outputs the video image to the ECU section 12; and an external communication unit 18 which performs communication between the imaging element control unit 15 and the ECU section 12.

The camera sections 11B, 11C and 11D have the same structures as that of the camera section 11A, and are electrically connected to the ECU section 12, similarly to the camera section 11A.

The camera sections 11A, 11B, 11C, and 11D are configured of, for instance, a front camera section provided in the vicinity of the windshield, a left-side camera section provided on the left side of the vehicle body, a right-side camera section provided on the right side of the vehicle body, and a back view camera section provided in the vicinity of a rear glass.

The camera sections 11A, 11B, 11C and 11D are provided on the outside of the vehicle, and accordingly water droplets, mud, snow melting agents and the like are accreted on lenses (or protective glass that covers front part of lens so as to protect lens) which are provided in the camera sections 11A, 11B, 11C and 11D, and accordingly an accretion that becomes the accreted contamination needs to be eliminated, in order to secure the transmission of the lens (or protective glass). When the contamination level (index value of contamination) of the lens (or protective glass) has become a predetermined value (threshold) or higher, the ECU section 12 of the imaging device 10 notifies the crew that the lens (or protective glass) is contaminated, at the time when the vehicle has arrived at a service station, a parking lot of a home or the vicinity thereof, each of which has fixtures and a facility for eliminating the contamination thereby provided therein, and urges the crew to eliminate the contamination.

The ECU section 12 includes: a CPU (Central Processing Unit) 21; an accretion diagnosis unit 22 that receives a command from the CPU 21 and performs processing; a contamination notification determination unit 23; a vehicle position determining unit 24; an external communication unit 26; and a RAM (Random Access Memory) 27 and a Flash ROM (Flash Read Only Memory) 28 which are connected to the CPU 21.

The CPU 21 sends commands for various processes to each of the units in the ECU section 12, and determines whether or not a navigation device 31 which will be described later is connected to the ECU section 12.

The accretion diagnosis unit 22 diagnoses the states of the contaminations that have been accreted on the lenses (or protective glass of lens) of the camera sections 11A, 11B, 11C and 11D, from images which have been imaged by the camera sections 11A, 11B, 11C and 11D. Specifically, the accretion diagnosis unit 22 determines whether or not the contamination levels (index values indicating degree of contamination) are a predetermined value or higher.

The contamination notification determination unit 23 acquires navigation information such as route guide information, a route guide state, a self-vehicle position, a facility position and a distance between the self-vehicle and the facility, from a GPS 31a and a database 31b of the navigation device 31. Thereby, the contamination notification determination unit 23 determines whether or not the self-vehicle has arrived at the facility such as the service station and the home in which the contamination of the lenses or the protective glass of the camera sections 11A, 11B, 11C and 11D can be eliminated, whether or not there is the facility such as the service station in a predetermined distance range from the route which is being guided, or whether or not there is the facility in a predetermined distance range from the self-vehicle; and thereby determines whether or not the crew should be notified that the lens or the protective glass of the lens is contaminated.

When the self-vehicle has arrived at the facility or the home, or there is the facility in the predetermined distance range from the self-vehicle or the route, the CPU 21 performs the contamination notification, on the basis of the determination.

The vehicle position determining unit 24 determines that the vehicle is positioned in the service station, by being triggered by at least one condition among condition (1) that an openable and closable lid has been opened which covers a compensating port provided in a vehicle so that a power source of the vehicle is replenished, condition (2) that a vehicle having a motor mounted thereon has stopped on a non-contact power-feeding device, and condition (3) that communication with the narrow-range wireless communication device such as the wireless LAN and DSRC, which is installed in the service station, has been established in the vehicle side.

The power source of the vehicle is a fuel such as gasoline and light oil in the case of a vehicle having only an engine mounted thereon, is an electric power in the case of a vehicle having the motor mounted thereon (electric car or hybrid car), and is a fuel such as hydrogen in the case of a fuel battery vehicle. In addition, the compensating port is an oil-feeding port in the vehicle that has only an engine mounted thereon, the power-feeding port in the case of the vehicle having the motor mounted thereon, and a hydrogen supply port in the case of the fuel battery vehicle.

The non-contact power-feeding device regarding the vehicle having the motor mounted thereon includes a power-receiving unit provided in the bottom part of the vehicle having the motor mounted thereon, and an electric-power-transmission unit installed in the parking space; and is enabled to feed the electric power to the vehicle from the outside of the vehicle when the power-receiving unit is brought close to the upper part of the power-transmission unit.

The external communication unit 26 performs communication between the ECU section 12 and various instruments that are provided in the vehicle side and will be described in detail later, through a vehicle communication line 46.

The RAM 27 temporarily stores time series image data which are input from the camera sections 11A, 11B, 11C and 11D, and other data therein. The stored image data is subjected to various processes in the accretion diagnosis unit 22, and is used for the determination of the contamination state.

In the Flash ROM 28, data for performing various processes such as a command, diagnosis and determination in the ECU section 12 are stored.

The vehicle is provided with a navigation device 31, a display device 32, a speaker device 33, a narrow-range wireless communication device 34, a non-contact power-feeding device (power-receiving unit) 36, lights 37, a vehicle speed sensor 41, a shift position sensor 42, a lid opening and closing sensor 43 and a remaining fuel amount meter 44; each of those is connected to the vehicle communication line 46; and data and information are exchanged therebetween.

The navigation device 31 is provided with a GPS (Global Positioning System) 31a, and a databases 31b of a map, information on peripheral facility and the like, so as to inform a crew of the present position of the self-vehicle and of a route to a destination. The display device 32 notifies the user that the lens (or protective glass of lens) is contaminated, by the display. The speaker device 33 notifies the user that the lens (or protective glass of lens) is contaminated, by a sound.

The navigation device 31, the display device 32 and the speaker device 33 are connected directly to the ECU section 12, and various signals are input thereto from the ECU section 12.

The narrow-range wireless communication device 34 performs narrow-range wireless communication such as the wireless LAN, DSRC and the like, with a narrow-range wireless communication device provided in the facility such as the service station.

When the vehicle is the vehicle having the motor mounted thereon, as has been described above, the non-contact power-feeding device (power-receiving unit) 36 enables an electric power to be fed to the vehicle from the outside of the vehicle in a non-contact manner. The lights 37 are formed of, for instance, a head lamp, a fog lamp, left and right blinkers, a stop lamp, a back lamp and the like, which are a plurality of lights. The vehicle speed sensor 41 senses the speed of the vehicle (vehicle speed). The shift position sensor 42 detects a shift position of a gearbox in the vehicle, for instance, a parking position "P". When a power source of the vehicle is a fuel such as gasoline, light oil, alcohol, hydrogen and the like, the lid opening and closing sensor 43 detects the opening and closing of the lid that covers the compensating port (or cap which seals compensating port) for supplying the fuel to the fuel tank of the vehicle therethrough. The remaining fuel amount meter 44 detects the remaining amount of the fuel.

In addition, when the vehicle is the vehicle having the motor mounted thereon, the lid opening and closing sensor 43 detects the opening and closing of the lid that covers a compensating port (power-feeding port) for supplying the electric power to a battery of the vehicle therethrough. In addition, the vehicle having the motor mounted thereon is provided with a remaining battery capacity meter for detecting a remaining storage amount of the battery, in place of the remaining fuel amount meter 44.

Next, an operation of the above described imaging device 10 will be described below.

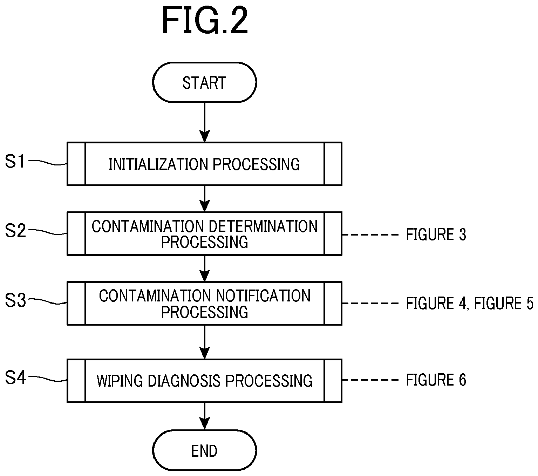

Figure 2 is a flow chart showing various processes of the imaging device 10.

Firstly, the imaging device 10 performs initialization processing (step S1) to reset a variable, a value of a flag, an elapsed time of a timer and the like, which have been set in various processes that have been performed in the imaging device 10 when the user has turned the ignition switch of the vehicle ON last time, and to delete an image in a memory, and the like, which have been stored in the various processes.

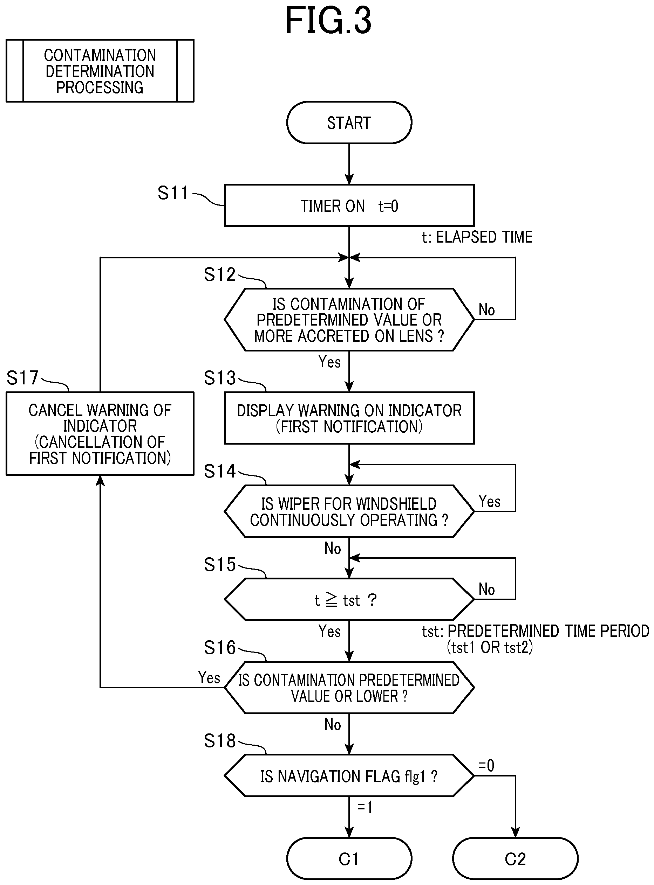

Next, the imaging device 10 determines whether or not the contamination to be eliminated has been accreted on the surface of the lens (or protective glass) of the camera section, or whether or not the contamination has been continuously accreted, by the contamination determination processing (step S2). When the contamination to be eliminated is accreted, the imaging device 10 notifies the crew in the vehicle of the content. This processing will be described in detail with reference to Figure 3.

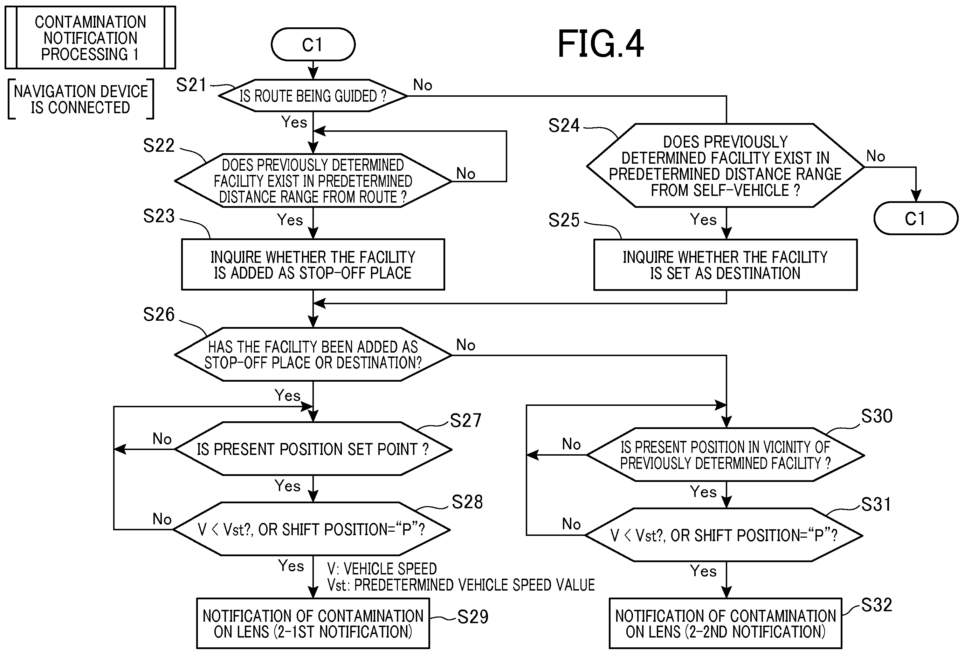

Then, when the contamination to be eliminated has been accreted, if the navigation device is connected to the vehicle, for instance, the imaging device 10 performs contamination notification processing by which the imaging device 10 makes the crew stop at a service station in which fixtures that can eliminate the contamination, such as a brush for washing, a sponge for washing, a dust cloth, a bucket and the like, and a facility such as a faucet are arranged, by using a route guide of the navigation device, and urges the crew in the vehicle to eliminate the contamination (step S3). This processing will be described in detail with reference to Figure 4.

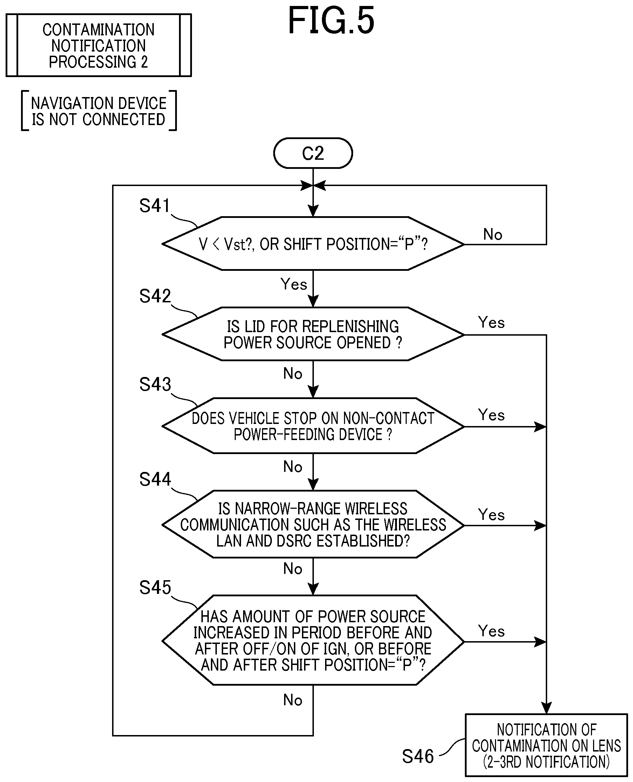

In addition, in the contamination notification processing, for instance, when the navigation device is not connected to the vehicle, the imaging device 10 urges the crew in the vehicle to eliminate the contamination, by using information obtained from the vehicle when the vehicle has arrived at the service station, the parking lot of the home or the like. This processing will be described in detail with reference to Figure 5.

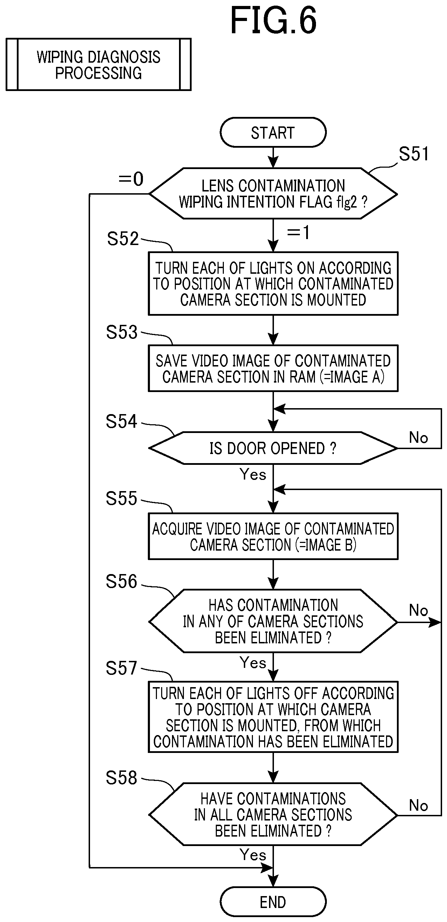

Furthermore, after having notified the crew of the contamination, the imaging device 10 performs wiping diagnosis processing which diagnoses whether or not the contamination has been eliminated by the crew and the transmission of the lens (or protective glass) has been secured (step S4). This processing will be described in detail with reference to Figure 6.

Figure 3 is a flow chart showing contamination determination processing of the imaging device 10. (As for reference numerals in the following description, refer to Figure 1.)

Firstly, the imaging device 10 turns the timer ON, and sets the elapsed time t at t=0 (step S11).

Next, the accretion diagnosis unit 22 determines whether or not such a contamination has been accreted on the lens (or protective glass) that the index value which indicates the contamination level of the lens (or protective glass) of the camera section is a predetermined value (threshold) or higher (step S12).

In order to determine the contamination level of the lens (or protective glass) of the camera section, there is a method of distinguishing the type of the contamination, and determining an amount of the accreted contamination.

The types of the contamination are: accretion (a) having high transmission (which is transparent or nearly transparent moisture such as rain, and has low viscosity); accretion (b) having lower transmission than that of the accretion (a) (which is dried substance of mud, snow melting agent and the like, or is mud, snow melting agent and the like that contain moisture and have high viscosity); and cloudy contamination (c) on whole surface of the lens (contamination having lower transmission than that of accretion (a)). The cloudiness means such a phenomenon that impurities contained in the moisture are dried, and thereby the impurities precipitate, deposit on the surface of the lens and become whitish contamination.

As for the accretion (a) having high transmission, for instance, the imaging device 10 divides the image into each block, and calculates an image frequency (spatial frequency) in each of the divided blocks. The image in which the raindrop has been accreted on the surface of the lens becomes a state of being blurred, in comparison with an image in which the raindrop is not accreted, and has such characteristics that the image frequency becomes lower. The present method makes it possible to determine the presence or absence and the amount of the raindrop accreted (accretion having high transmission) onto the surface of the lens, by calculating the image frequency by using the characteristics.

As for the accretion (b) having lower transmission, for instance, as is described in (A) Japanese Patent Laid-Open No. 2014-30188, the imaging device 10 divides the input image into a plurality of blocks, extracts the edge of the input image to generate the edge image, and calculates the average brightness in each of the blocks. The average brightness value of the blocks on which the mud contamination is accreted tends to be lower than the average brightness value of the block on which the mud contamination is not accreted. By using this tendency as characteristics of the mud contamination, the imaging device 10 makes it possible to determine the presence or absence of the mud contamination and the amount of the accreted mud. In addition, it is also acceptable to use other embodiments of the above described (A).

As for the cloudiness (c) on the whole surface of the lens, for instance, as is described in (B) Japanese Patent Laid-Open No. 2014-7686, the accretion diagnosis unit 22 determines a difference in brightness from two predetermined points of the input image, and the pixel number in between the two points, and calculates a brightness gradient from these difference in the brightness and pixel number. As the degree of the cloudiness on the surface of the lens is higher, a bright image in the input image scatters and spreads more, and accordingly the brightness gradient decreases. By using characteristics like this, the accretion diagnosis unit 22 makes it possible to determine the presence or absence of the cloudiness on the surface of the lens and the amount of the cloudy accretion. In addition, it is also acceptable to use other embodiments of the above described (B).

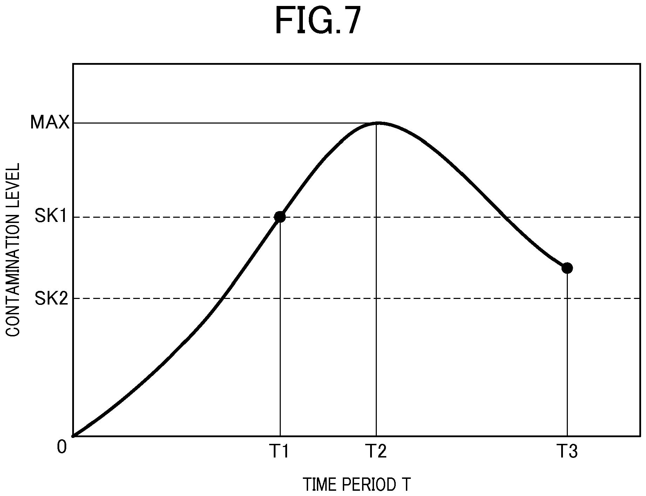

In addition, the temporal change and the threshold of the contamination level will be described with reference to the graph of Figure 7.

In Figure 3, when the contamination has not been accreted (No, step S12) on the lens (or protective glass), of which the contamination level is the predetermined value or higher, the imaging device 10 repeats this processing (step S12).

When the contamination has been accreted (Yes, step S12) on the lens (or protective glass), of which the contamination level is the predetermined value or higher, the CPU 121 makes an indicator (warning light) that is provided on a meter panel of the vehicle turned on, and makes the indicator display the warning as the first notification (step S13).

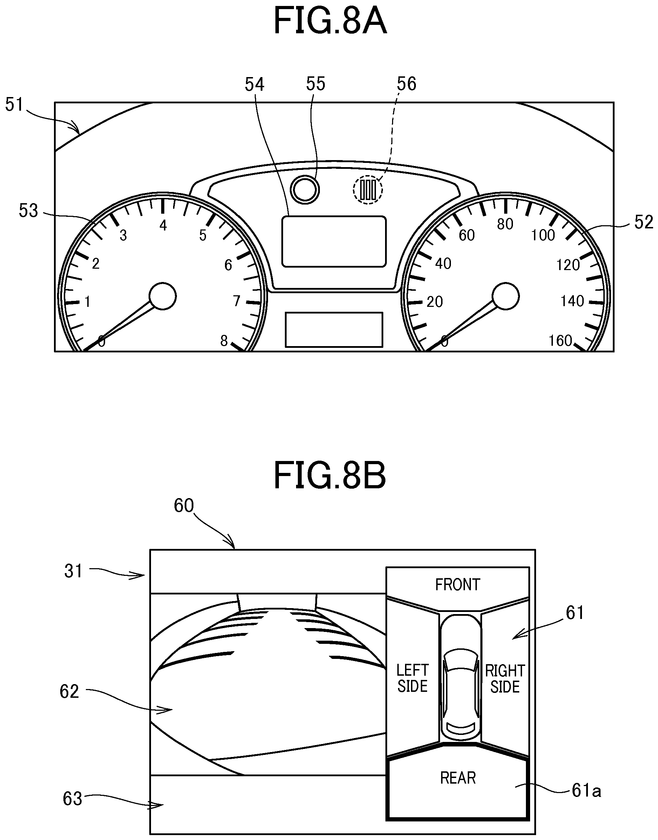

As for the above described display warning, the CPU 21 makes a display which is provided on the meter panel and the navigation device of the vehicle display such a content as "The back view camera is contaminated" or the like, for instance, and/or makes the speaker device which is provided in the vehicle notify the user of the contamination with a voice. The display device 32 and the speaker device 33 will be described in detail with reference to Figures 8A and 8B.

Next, the CPU 21 determines whether or not the wiper for the windshield of the vehicle continuously operates (step S14).

When the wiper for the windshield of the vehicle continuously operates (Yes, step S14), the CPU 21 repeats this processing (step S14). This is because the contamination notification determination unit 23 has determined that there is a high possibility that the contamination continues because it is a rain fall state, on the basis that the wiper for the windshield continuously operates. Accordingly, the CPU 21 does not perform further processing (notification of contamination, and the like).

When the wiper for the windshield of the vehicle does not continuously operate (No, step S14), the CPU 21 determines whether or not an elapsed time period t has reached a predetermined time period tst (step S15). The CPU 21 monitors a change of the contamination level for a predetermined time period, by using the timer.

The above described predetermined time period tst (set value of monitoring time period) is changed according to the type of the contamination. When the type of the contamination is the accretion having the low transmission, such a possibility is low that the transmission is recovered, and accordingly the monitoring time period is set to be short (for instance, predetermined time period tst = tst1 = 5 minutes). When the type of the contamination is the accretion having the high transmission or is the cloudiness, such a possibility is high that the transmission is recovered, and accordingly the monitoring time period is set to be long (for instance, predetermined time tst = tst2 = 30 minutes) .

When the relationship of t<tst holds (No, step S15), the CPU 21 repeats this processing (step S15).

When the relationship of t≥tst holds (Yes, step S15), the accretion diagnosis unit 22 determines whether or not a contamination level is a predetermined value or lower (step S16).

When the contamination level is the predetermined value or lower (Yes, step S16), the CPU 21 cancels the warning of the indicator of the first notification (step S17) .

When the contamination level is not the predetermined value or lower (No, step S16), the CPU 21 determines whether an flg 1 of navigation presence or absence, which indicates whether or not the navigation device is connected to the vehicle, is 0 (zero: navigation device is not connected) or 1 (navigation device is connected) (step S18).

When the flg 1 of the navigation presence or absence = 1, the CPU 21 executes the contamination notification processing 1 that is shown in Figure 4 (step S18, =1 → connector C1). When the flg 1 of the navigation presence or absence = 0, the CPU 21 executes the contamination notification processing 2 that is shown in Figure 5 (step S18, =0 → connector C2).

Figure 4 is a flow chart showing the contamination notification processing 1. (As for reference numerals in the following description, refer to Figure 1.)

When it has been determined by the CPU 21 that the navigation device 31 is connected to the vehicle, specifically, to the imaging device 10, the contamination notification determination unit 23 firstly determines whether or not the navigation device 31 is guiding the route (step S21).

When the route is being guided (Yes, step S21), the contamination notification determination unit 23 determines whether there is a previously determined facility, specifically, a facility such as a service station or the like in which the fixtures and a faucet are arranged, by which the contamination on the lens (or protective glass) can be eliminated, in a predetermined distance range (for instance, in 1 km) from the route which is being guided (step S22).

When the facility exists, the contamination notification determination unit 23 displays whether or not the facility is added as a stop-off place, on a display or the like, and inquires of the crew whether or not (step S23). For instance, the contamination notification determination unit 23 inquires of the crew about such a content as "There is so-and-so near a guide route. Do you set it as a stop-off point?", by the display or the voice. At this time, when there exist a plurality of candidates of the facilities, the contamination notification determination unit 23 displays the plurality of facilities.

In addition, when the route is not being guided by the navigation device (No, step S21), the contamination notification determination unit 23 determines whether or not the previously determined facility such as the service station exists in a predetermined distance range (for instance, in 1 km) from the self-vehicle (step S24).

When the facility does not exist (No, step S24), the contamination notification determination unit 23 executes the step S21 again (step S24, No → connector C1) .

When the facility exists (Yes, step S24), the contamination notification determination unit 23 displays whether the facility should be set as a destination, on a display or the like, and inquires of the crew whether (step S25). For instance, the contamination notification determination unit 23 inquires of the crew about such a content as "There is so-and-so around here. Do you set the place as a destination?", by the display or the voice. At this time, when there exist a plurality of candidates of the facilities, the contamination notification determination unit 23 displays the plurality of facilities.

Then, the contamination notification determination unit 23 determines whether or not the crew has added the facility of the candidate as the stop-off place or the destination, to the navigation device (step S26).

When the facility has been added to the navigation device (Yes, step S26), the contamination notification determination unit 23 determines whether or not the present position of the self-vehicle is a set point (step S27) .

When the present position of the self-vehicle is not a set point (No, step S27), the contamination notification determination unit 23 repeats this processing (step S27). When the present position of the self-vehicle is the set point (Yes, step S27), the contamination notification determination unit 23 determines whether the vehicle speed V is smaller than the predetermined vehicle speed value Vst (V<Vst) or the shift position of the gearbox in the vehicle is "P (parking)" (step S28). The predetermined vehicle speed value Vst is, for instance, 1 km/h.

When any of the relationship of V<Vst and the shift position="P" does not hold (No, step S28), the contamination notification determination unit 23 executes the step S27 again.

When any one of the relationship of V<Vst and the shift position="P" holds (Yes, step S28), the CPU 21 notifies the crew of the contamination on the lens, as the 2-1st notification (step S29). For instance, the CPU 21 notifies the user of such a content as "You have arrived at the vicinity of so-and-so. Eliminate the contamination of the back view camera.", by the display on the display or by the voice; or performs notification by displaying the video image which has been imaged by the contaminated camera section, making the indicator turn on or blink, and/or the like.

In addition, when the crew has not added the facility such as the service station, as the stop-off place or the destination to the navigation device (No, step S26), the contamination notification determination unit 23 determines whether or not the present position of the self-vehicle is the previously determined facility (step S30).

When the present position is not the previously determined facility (No, step S30), the contamination notification determination unit 23 repeats this processing (step S30). When the present position is the previously determined facility (Yes, step S30), the contamination notification determination unit 23 determines which of the relationship of V<Vst or the shift position="P" holds (step S31).

When any of the relationship of V<Vst and the shift position="P" does not hold (No, step S31), the contamination notification determination unit 23 executes the step S30 again.

When any one of the relationship of V<Vst and the shift position="P" holds (Yes, step S31), the CPU 21 notifies the crew of the contamination on the lens, as the 2-2nd notification (step S32). For instance, the CPU 21 notifies the user of such a content as "You have arrived at the vicinity of so-and-so. Eliminate the contamination of the back view camera."; or performs the notification, by displaying the video image which has been imaged by the contaminated camera section on the display, making the indicator turn on or blink, and/or the like.

As has been described above, the CPU 21 has performed the notification of the contamination on the lens (2-1st notification and 2-2nd notification) after the vehicle has arrived at the previously determined facility, but the timing is not limited to the above timing, and the CPU 21 may perform the notification of the contamination on the lens and/or the display of the candidate of the facility, at the time when it has been found out that the previously determined facility exists in a predetermined distance range from the route or from the self-vehicle.

Figure 5 is a flow chart showing contamination notification processing 2. (As for reference numerals in the following description, refer to Figure 1.)

When the navigation device is not connected to the vehicle, the vehicle position determining unit 24 firstly determines which of the relationship of V<Vst or the shift position="P" holds (step S41).

When any of the relationship of V<Vst and the shift position="P" does not hold (No, step S41), the vehicle position determining unit 24 repeats this processing (step S41).

When any one of the relationship of V<Vst and the shift position="P" holds (Yes, step S41), the vehicle position determining unit 24 determines whether or not a lid for replenishing a power source has been opened (step S42) .

When the lid is not opened (No, step S42), the vehicle position determining unit 24 determines whether or not a vehicle has stopped on a non-contact power-feeding device (electric-power-transmission unit) (step S43). It is sensed by a sensor that the power-receiving unit in the vehicle side has been arranged on the electric-power-transmission unit, and the electric power is automatically or manually fed.

When the vehicle does not stop on the electric-power-transmission unit of the non-contact power-feeding device (No, step S43), the vehicle position determining unit 24 determines whether or not communication with the narrow-range wireless communication such as the wireless LAN and DSRC has been established (step S44). In the service station or the like, the narrow-range wireless communication device is installed which can perform the wireless LAN, DSRC and the like.

When the narrow-range wireless communication is not established (No, step S44), the vehicle position determining unit 24 determines whether or not the amount of the power source (remaining fuel amount or remaining battery capacity) has increased, at the time point when the ignition switch has been changed from the time point OFF to the time point ON, or at the time point when the shift position has been changed from the time point at which the shift position has been in a position "other than P", to the position "P" (step S45).

When the amount of the power source does not increase (No, step S45), the vehicle position determining unit 24 executes the step S41 again.

In the cases where any of the relationship of V<Vst and the shift position="P" holds (Yes, step S41), where the lid has been opened (Yes, step S42), where the vehicle has stopped on the non-contact power-feeding device (Yes, step S43), where the narrow-range wireless communication has been established (Yes, step S44), and where the amount of the power source has increased (Yes, step S45), the CPU 21 notifies the user of such contents that the lens is contaminated and the user is urged to eliminate the contamination, by the display device, the speaker device and/or the indicator, as the 2-3rd notification (step S46).

Figure 6 is a flow chart showing wiping diagnosis processing. (As for reference numerals in the following description, refer to Figure 1.)

As for this wiping diagnosis processing, even in the state in which the ignition switch of the vehicle is turned OFF, the ECU section 12 is continuously energized for a predetermined time period (for instance, 10 minutes) after the ignition switch has been turned OFF, and the processing is performed by the ECU section 12.

For instance, when having displayed a message "Do you wipe contamination on the lens?" and required the crew to send the reply, when notifying the crew of the contamination on the lens, the CPU 21 determines whether or not there has been either of a reply that a flg 2 of a lens contamination wiping intention flag, which indicates whether or not the crew has an intention to wipe the contamination on the lens, is 0 (where zero means that there is no intention to wipe contamination on lens or that door of vehicle has been opened), or a reply that the flg 2 is 1 (which means that there is an intention to wipe contamination on lens) (step S51).

When the flg 2 of the lens contamination wiping intention flag =0 (=0, step S51), the processing is ended. When the flg 2 of the lens contamination wiping intention flag =1 (=1, step S51), the CPU 21 selects predetermined lights from each of the lights, according to a position at which the contaminated camera section is mounted, and makes the lights turn on (step S52). This is the contamination notification which is notified as the 3-1st notification by the lights.

For instance, the CPU 21 makes a head lamp or a fog lamp turn on in the case of the contamination of a front camera section, makes a left blinker turn on in the case of the contamination of a left-side camera section, makes a right blinker turn on in the case of the contamination of a right-side camera section, and makes a stop lamp or a back lamp turn on in the case of the contamination of a back view camera section.

The CPU 21 saves the video image that has been imaged by the contaminated camera section, in a memory (RAM 27) as an image A (step S53).

Next, the CPU 21 determines whether or not the door of the vehicle has been opened (step S54). That is, the CPU 21 determines whether or not the crew (driver or fellow passenger) in the vehicle has got off and wiped the contamination of the camera section.

When the door is not opened, the CPU 21 repeats the processing (No, step S54). When the door has been opened (Yes, step S54), the CPU 21 acquires the video image which has been imaged by the contaminated camera section, and saves the video image in the memory (RAM 27) as an image B (step S55).

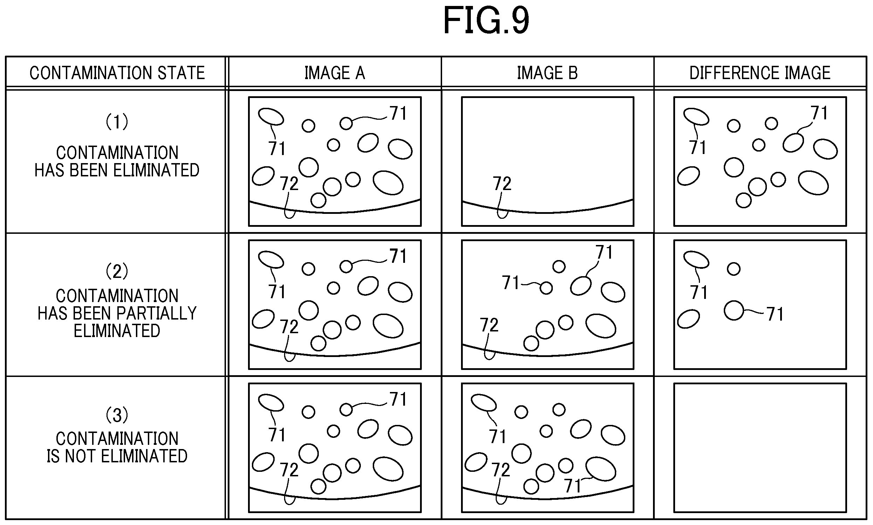

Next, the accretion diagnosis unit 22 compares the above described image A and image B, and diagnoses whether or not the contamination of the camera section has been eliminated (step S56). The accretion diagnosis unit 22 performs this processing for each of the plurality of camera sections. The diagnosis procedure of the contamination state by comparison between the images will be described in detail with reference to Figure 9.

When the contamination of the camera section has not been eliminated (No, step S56), the accretion diagnosis unit 22 executes the step S55 again. When the contamination of the camera section has been eliminated (Yes, step S56), the CPU 21 makes the predetermined lights in each of the lights turned off, according to a position at which the camera section is mounted, from which the contamination has been eliminated (step S57). This is the notification of contamination cancellation, which is notified as the 3-2nd notification by the lights. Then, the accretion diagnosis unit 22 determines whether or not the contaminations in all of the camera sections have been eliminated (step S58).

When the contaminations in all of the camera sections have not been eliminated (No, step S58), the accretion diagnosis unit 22 executes the step S55 again. When the contaminations in all of the camera sections have been eliminated (Yes, step S58), the processing is ended.

Figure 7 is a graph showing a temporal change of a contamination level of a lens or a protective glass of a camera, and a threshold.

In the graph, a vertical axis shows the contamination level (index value indicating degree of contamination), and a horizontal axis shows a time period.

At a time period T= 0, the contamination level is 0, specifically, the lens or the protective glass is in a state of being uncontaminated.

The contamination level gradually increases as the time period T elapses from T=0, and at T=T1, the time period reaches a notification threshold SK1 at which the imaging device 10 notifies the user that the lens or the protective glass is contaminated. When the time period T further elapses, the contamination level also increases, and at a time period T2, the contamination level becomes the maximum value MAX. When the time period T further elapses, the contamination level gradually decreases. At a time period T=T3, the contamination level is lower than the notification threshold SK1, but the state continues in which the contamination is accreted, and accordingly the imaging device 10 performs notification of urging the user to wipe the lens or the protective glass.

When the timer period T elapses, there is the case where the accretion such as the water droplets dries and the transmission of the lens or the protective glass is recovered. In addition, if the lens has been subjected to hydrophilic coating treatment, a uniform water film is formed, and the transmission of the lens or the protective glass tends to be easily recovered. When the contamination level becomes equal to a notification cancellation threshold SK2 or lower, at which the imaging device 10 cancels the notification of the contamination, the imaging device 10 cancels the notification of the contamination.

In addition, the contamination level of the contamination such as mud does not decrease, even though the time period T has elapsed.

As has been described above, there is the case where the transmission of the accretion such as the water droplets having high transmission temporarily decreases, and accordingly the imaging device 10 may distinguish the type of the contamination, and may determine whether or not to perform the notification of the contamination. For instance, it is also acceptable that the imaging device 10 performs the notification of the contamination in the case of the mud and the cloudiness, and does not perform the notification of the contamination in the case of the water droplets.

Figures 8A and 8B are an explanatory view for describing a display device and a speaker device which perform the notification of the contamination.

Figure 8A is a view showing a meter panel; and Figure 8B is a view showing display on a display of a navigation device.

As is shown in Figure 8A, a meter panel 51 is provided with a speed meter 52 and a tachometer 53 that are horizontally separated from each other, and a meter display 54 that is arranged between the speed meter 52 and the tachometer 53. On the meter display 54, characters or icons are displayed which notify the user that the lens (or protective glass) of the camera section is contaminated or which urge the user to clean up the contamination. Together with this display, the speaker device 56 provided on the meter panel 51 notifies the user of the contamination, or sounds the voice of urging the user to clean up the contamination.

The above described meter display 54 constitutes a part of the display device 32 (see Figure 1). In addition, the speaker device 56 constitutes a part of the speaker device 33 (see Figure 1).

As is shown in Figure 8B, a navigation display 60 of a navigation device 31 includes: a vehicle imaging region display unit 61 that planarly displays regions of the vehicle, which have been imaged by the plurality of camera sections; a video image display unit 62 that displays a video image which has been imaged by the camera section; and a notification display unit 63 that displays the notification of the contaminations on the lenses (or protective glass) of the camera sections.

The vehicle imaging region display unit 61 shows which region of regions of the vehicle, in the front, in the left side, in the right side or in the rear has been imaged as the video image displayed on the video image display unit 62, by surrounding the region with a thick line. In the figure, it is shown that a region 61a of the rear of the vehicle is imaged by the back view camera section, and the video image of the rear of the vehicle is displayed on the video image display unit 62. On the notification display unit 63, characters "Please wipe back view camera", for instance, are displayed which urges the user to wipe the contamination on the lens or the protective glass of the camera section. In addition, the navigation device 31 is provided with a not-shown speaker device, and the voice sounds from the speaker device, which urges the user to eliminate the contamination.

Thus, the navigation device 31 displays the video images of each of the camera sections, in addition to the notification by the characters, the icons and the voice; thereby the crew can actually feel which camera section has a contaminated lens or protective glass, and what level is the contamination; and the navigation device 31 can further urge the crew to eliminate the contamination.

The above described notification display unit 63 of the navigation display 60 constitutes a part of the display device 32 (see Figure 1). In addition, the speaker device of the navigation device 31 constitutes a part of the speaker device 33 (see Figure 1).

Figure 9 is an explanatory view showing a diagnosis procedure for a contamination state of the lens or the protective glass, by comparison between images.

A difference image is obtained from the previously described image A and image B. Reference numeral 71 in the figure shows an image of the accretion which has been accreted on the lens surface; and reference numeral 72 shows an image of the edge of the lens.

In the case where images 71 of a plurality of accretions are photographed in the image A, the image of the accretion is not photographed in the image B, and the images 71 of the plurality of accretions which are the same as those in the image A are photographed in the difference image, it is determined as the contamination state that (1) contamination has been eliminated.

In the case where the images 71 of the plurality of accretions are photographed in the image A, the images 71 of the accretions of which the number is fewer than that in the image A are photographed in the image B, and the images 71 of the accretions of which the number is fewer than that in the image A are photographed in the difference image, it is determined as the contamination state that (2) contamination has been partially eliminated.

In the case where the images 71 of the plurality of accretions are photographed in the image A, the images 71 of the accretions which are the same as those in the image A are photographed in the image B, and the images 71 of the accretions are not photographed in the difference image, it is determined as the contamination state that (3) the contamination has not been eliminated.

As in (1), when the images 71 of the plurality of accretions which are the same as those in the image A are photographed in the difference image, and the contaminations have been eliminated, the contamination level (index value indicating degree of contamination) is small; and as in (3), when the accretion is not photographed in the difference image and the contamination has not been eliminated, the contamination level is large.

If the contamination level is lower than the predetermined value, it is determined that "lens surface becomes clean (transmission of lens surface has been improved)", and when the contamination level is the predetermined value or higher, it is determined that "clean-up is needed again (transmission of lens surface has not been improved)".

As is shown in Figure 1 and Figure 4, the vehicle-mounted imaging device includes: an accretion diagnosis unit 22 that diagnoses a state of contaminations which have been accreted on lenses of camera sections 11A, 11B, 11C and 11D that are mounted on the outside of a vehicle and is cameras, or on protective members (protective glass) of the lenses; and a contamination notification determination unit 23 that determines the presence or absence of a notification of contamination, on the basis of positional information between a predetermined type of facility which is a previously determined facility and is obtained from a navigation device 31 that is provided with a GPS 31a which acts as a vehicle position identifying unit that identifies a position of the vehicle and a database 31b that contains a map and peripheral facility information, and in which the contamination can be eliminated, and the vehicle, wherein when it is determined by the accretion diagnosis unit 22 that contamination levels of the lenses of the camera sections 11A, 11B, 11C and 11D or the protective glasses of the lenses are equal to or higher than a notification threshold SK1 which is a predetermined value, a route to a destination is set by the navigation device 31, and it has been determined by the contamination notification determination unit 23 that the facility exists in a predetermined distance range from the route, the vehicle-mounted imaging device notifies the user that the lenses of the camera sections 11A, 11B, 11C and 11D or the protective glasses of the lenses are contaminated, by the display device 32 and/or the speaker device 33 provided in the vehicle, and also displays a candidate of the facility on the display device 32.

According to this configuration, the vehicle-mounted imaging device can notify the user that the lenses or the protective glasses of the lenses are contaminated, in an environment or the vicinity thereof, in which fixtures (for instance, washing brush, sponge, dust cloth, bucket and the like) for eliminating the contamination thereby that has been accreted on the lenses of the camera sections 11A, 11B, 11C and 11D or the protective glasses of the lenses, and a facility such as a faucet are arranged, and accordingly alleviates the intrusiveness due to the notification; and the user can effectively eliminate the contaminations on the lenses of the camera sections 11A, 11B, 11C and 11D or the protective glasses of the lenses. Furthermore, there is a high possibility that the user notices that the camera sections 11A, 11B, 11C and 11D are contaminated when arriving at the predetermined type of the facility and getting off from the vehicle, which can accordingly make the user resist forgetting the contamination eliminating action.

In addition, it is notified by the display device 32 and/or the speaker device 33 provided in the vehicle that the lens or the protective glass of the lens is contaminated; accordingly the crew can receive the notification in a state of being in the vehicle, and does not need a conventional portable device; and furthermore, the imaging device 10 uses devices provided in the vehicle as the display device 32 and the speaker device 33, accordingly the imaging device 10 can be simplified and its cost reduced.

In addition, the vehicle-mounted imaging device can easily search a predetermined type of facility by utilizing a route guide of the navigation device 31, which makes it possible to quickly eliminate the contamination.

In addition, when it has been determined by the accretion diagnosis unit 22 that contamination levels of the lenses of the camera sections 11A, 11B, 11C and 11D or the protective glasses of the lenses are equal to or higher than the notification threshold SK1, and it has been determined by the contamination notification determination unit 23 that the facility exists in a predetermined distance range from the vehicle, based on the present position identified by the GPS 31a and information in the database 31b, the vehicle-mounted imaging device notifies the user that the lenses of the camera sections 11A, 11B, 11C and 11D or the protective glasses of the lenses are contaminated, and also displays a candidate of the facility, by the display device 32 and/or the speaker device 33 provided in the vehicle.

In addition, the vehicle-mounted imaging device can easily search a predetermined type of facility due to the GPS 31a, which makes it possible to quickly eliminate the contamination.

In addition, when it has been determined by the accretion diagnosis unit 22 that contamination levels of the lenses of the camera sections 11A, 11B, 11C and 11D or the protective glasses of the lenses are equal to or higher than the notification threshold SK1, and it has been determined by the contamination notification determination unit 23 that the vehicle has stopped in the facility, on the basis of the present position of the vehicle identified by the GPS 31a and information in the database, the vehicle-mounted imaging device notifies the user that the lenses of the camera sections 11A, 11B, 11C and 11D or the protective glasses of the lenses are contaminated, by the display device 32 and/or the speaker device 33 provided in the vehicle.

According to this configuration, the vehicle-mounted imaging device identifies the present position of the vehicle due to the GPS 31a, and makes the vehicle stop at the predetermined type of the facility on the basis of this present position and the database, which makes it possible to thereby quickly eliminate the contamination.

The above described facility is a service station in which it is possible to replenish a fuel, an electric power and the like that act as a power source and are supplied to an engine, a motor, a fuel battery and the like that are a driving source of the vehicle, or a parking lot, and accordingly the user can easily eliminate the contamination, because the service station has a washing space for washing the vehicle therein, fixtures for washing, and a facility such as a faucet arranged therein, and accordingly is a preferable environment for the contamination of the lens of the camera sections 11A, 11B, 11C and 11D or the protective glass of the lens to be eliminated therein. In addition, the parking lot is an environment that there is a high possibility that a building (home, house of acquaintance, company, office, store, factory or the like) relating to the crew in the vehicle exists in its vicinity, and in which the fixtures for eliminating the contamination thereby are easily obtained, and accordingly the crew can easily eliminate the contamination.

As is shown in Figure 1 and Figure 5, the vehicle-mounted imaging device includes: an accretion diagnosis unit 22 that diagnoses a state of contaminations which have been accreted on lenses of camera sections 11A, 11B, 11C and 11D that are mounted on the outside of the vehicle, or on the protective glasses of the lenses; and a vehicle position determining unit 24 which determines that the vehicle is at the service station, by being triggered by at least one condition out of conditions that a lid has been opened, which is provided in the vehicle so as to cover a compensating port for replenishing the power source therethrough, that the vehicle has stopped on a non-contact power-feeding device 36, and that communication with a narrow-range wireless communication device 34 such as a wireless LAN and DSRC installed in the service station has been established in the vehicle side, wherein when it has been determined by the accretion diagnosis unit 22 that contamination levels of the lenses of the camera sections 11A, 11B, 11C and 11D or the protective glasses of the lenses are equal to or higher than the notification threshold SK1, and it has been identified by the vehicle position determining unit 24 that the vehicle is at the service station, the vehicle-mounted imaging device notifies the user that the lenses of the camera sections 11A, 11B, 11C and 11D or the protective glasses of the lenses are contaminated, by the display device 32 and/or the speaker device 33 provided in the vehicle.

According to this configuration, when a lid is opened that covers a compensating port for replenishing a power source therethrough (for instance, in the case of vehicle that has only engine mounted thereon, fuel lid which covers oil-feeding port that supplies fuel therethrough, and in the case of electric vehicle and hybrid vehicle, lid which covers power-feeding port, and the like), when a power-receiving side of the non-contact power-feeding device 36 provided in the vehicle stops on an electric-power-transmission side of the non-contact power-feeding device 36, or when communication with a narrow-range wireless communication device 34 such as a wireless LAN and DSRC installed in the service station is established in the vehicle side, the vehicle position determining unit can identify that the vehicle is at the service station, based on at least one condition out of these conditions. Thereby, the vehicle-mounted imaging device can notify the user that the lenses of the camera sections or the protective glasses of the lenses are contaminated, in an environment, in which fixtures for eliminating the contaminations thereby that have been accreted on the lenses of the camera sections 11A, 11B, 11C and 11D or the protective glasses of the lenses, and a facility are arranged, and accordingly alleviates the intrusiveness due to the notification; and the user can effectively eliminate the contamination of the camera. In addition, even the vehicle having no navigation device mounted thereon can easily identify the existence of the service station.

The above described vehicle position determining unit 24 identifies that the vehicle is at the service station, on the basis of the information that an amount of the power source of the vehicle has increased, and accordingly when it has been sensed that the amount of the power source has increased, the vehicle position determining unit can determine that the power source has been replenished in the service station, and can identify that the vehicle is at the service station.

In addition, the accretion diagnosis unit 22 compares images which have been imaged in both states of a state in which an ignition switch of the vehicle is an OFF state and a state in which the ignition switch is an ON state, after the user has been notified of the contamination on the lens, determines whether or not the contamination on the lens has been eliminated, and when the contamination on the lens has not been eliminated, notifies the user of the contamination on the lens again; and thus the accretion diagnosis unit 22 determines whether or not the contamination on the lens has been eliminated, by using the images which have been imaged in the camera sections 11A, 11B, 11C and 11D, and accordingly it is not necessary in particular to install a device that detects whether or not the contamination on the lens has been eliminated, which can reduce the cost.

In addition, as is shown in Figure 1 and Figure 6, the vehicle-mounted imaging device sequentially compares an image that has been imaged right after the vehicle has stopped and an image that has been imaged most recently, after the user has been notified of the contamination on the lens; when the contamination has not been eliminated, makes lights 37 turn on or blink that are provided in the vehicle, according to a position at which the camera is mounted, and when the contamination has been eliminated, turns off the lights 37; and accordingly the user can easily check whether or not the contamination has been eliminated, even when the user is outside of the vehicle.

In addition, as is shown in Figure 1 and Figure 3, the vehicle-mounted imaging device does not notify the user that the lens or the protective member of the lens is contaminated, when a wiper for a windshield provided in the vehicle is continuously operated, accordingly determines that there is a high possibility that the contamination on the lens or the protective member of the lens continues because it is a rain fall state, on the basis that the wiper for the windshield continuously operates, and can avoid useless notification.

In addition, the vehicle-mounted imaging device changes a predetermined time period tst that is a set value of a monitoring time period during which the vehicle-mounted imaging device monitors the change of the contamination level, according to the type of the contamination on the lens or the protective member of the lens, and accordingly can efficiently notify the user of the contamination.

In addition, the predetermined time period tst is set at a predetermined time period tst1 that is a short time period, when the type of the contamination is an accretion having low transmission, and is set at a predetermined time period tst2 that is a long time period, when the type of the contamination is an accretion having high transmission or is cloudiness; and accordingly the vehicle-mounted imaging device sets the time period tst at the predetermined short time period tst1, when the type of the contamination is the accretion having the low transmission, because such a possibility is low that the transmission is recovered, and thereby can quickly notify the user of the contamination. In addition, the vehicle-mounted imaging device sets the time period tst at the predetermined long time period tst2, when the type of the contamination is the accretion having the high transmission or is the cloudiness, because such a possibility is high that the transmission is recovered, and thereby can cancel the notification of the contamination after the transmission has been surely recovered.

The above described embodiments show strictly one mode of the present invention, and can be arbitrarily modified and applied in such a range as not to deviate from the scope of the invention.

### Reference Signs List

10 Imaging device
11A, 11B, 11C and 11D Camera section (camera)
22 Accretion diagnosis unit
23 Contamination notification determination unit
24 Vehicle position determining unit
31 Navigation device
31a GPS (vehicle position identifying unit)
31b Database
32 Display device
33 Speaker device
34 Narrow-range wireless communication device
36 Non-contact power-feeding device (power-receiving side)
37 Lights
SK1 Notification threshold (predetermined value)
tst, tst1 and tst2 Predetermined time period (set value of monitoring time period)

## Claims

1. A vehicle-mounted imaging device (10) comprising:
an accretion diagnosis unit (22) that diagnoses a state of contamination which has been accreted on a lens of a camera that is mounted on an outside of a vehicle, or on a protective member of the lens; and
an external communication unit (26) that is configured to communicate in use with a display device (23) and/or a speaker device (33) provided in the vehicle and with a navigation device having a vehicle position identifying unit which identifies a position of the vehicle and a database containing a map and peripheral facility information;
a contamination notification determination unit (23) that determines a presence or absence of a notification of contamination, based on positional information on a predetermined type of facility that is a previously determined facility which is obtained from the navigation device through the external communication unit, and in which the contamination can be eliminated, and on the vehicle, wherein
when it has been determined by the accretion diagnosis unit that a contamination level of the lens of the camera or the protective member of the lens is a predetermined value or higher, and it has been determined by the contamination notification determination unit that the predetermined type of facility exists in a predetermined distance range from the vehicle, from a present position identified by the vehicle position identifying unit and information in the database, the vehicle-mounted imaging device notifies a user that the lens of the camera or the protective member of the lens is contaminated, and also displays a candidate of the predetermined type of facility, by the display device and/or the speaker device provided in the vehicle.

2. The vehicle-mounted imaging device according to claim 1, wherein the predetermined type of the facility is a service station or a parking lot in which a power source can be replenished that is supplied to a driving source of the vehicle.

3. The vehicle-mounted imaging device according to claim 1 or 2, wherein the accretion diagnosis unit compares images which have been imaged in both states of a state in which an ignition switch of the vehicle is an OFF state and a state in which the ignition switch is an ON state, after the user has been notified of the contamination on the lens, determines whether or not the contamination on the lens has been eliminated, and when the contamination on the lens has not been eliminated, notifies the user of the contamination on the lens again.

4. The vehicle-mounted imaging device according to claim 3, wherein the external communication unit is configured to communicate in use with lights that are provided in the vehicle, and the accretion diagnosis unit sequentially compares an image that has been imaged right after the vehicle has stopped and an image that has been imaged most recently, after the user has been notified of the contamination on the lens; and when the contamination has not been eliminated, makes, through the external communication unit, the lights turn on or blink that are provided in the vehicle, according to a position at which the camera is mounted, and when the contamination has been eliminated, turns off the lights.

5. The vehicle-mounted imaging device according to any one of claims 1 to 4, further comprising a CPU that is configured to determine in use whether or not a wiper for a windshield in the vehicle continuously operates, wherein when the CPU determined that the wiper for the windshield provided in the vehicle is continuously operated, the vehicle-mounted imaging device does not notify the user that the lens or the protective member of the lens is contaminated.

6. The vehicle-mounted imaging device according to any one of claims 1 to 5, wherein the vehicle-mounted imaging device changes a set value of a monitoring time period during which the vehicle-mounted imaging device monitors the change of the contamination level, according to the type of the contamination on the lens or the protective member of the lens.

7. The vehicle-mounted imaging device according to claim 6, wherein the set value of the monitoring time period is set at a short time period, when the type of the contamination is an accretion having low transmission, and is set at a long time period, when the type of the contamination is an accretion having high transmission or is cloudiness.

## Patentansprüche

1. Fahrzeugmontierte Bildgebungsvorrichtung (10) mit:
einer Ablagerungs-Diagnoseeinheit (22), die einen Zustand der Verschmutzung diagnostiziert, die sich auf einer Linse einer Kamera angesammelt hat, die außerhalb eines Fahrzeugs montiert ist, oder auf einem Schutzelement der Linse, und
einer externen Kommunikationseinheit (26), die ausgebildet ist, um im Gebrauch mit einer Anzeigevorrichtung (23) und/oder einer Lautsprechervorrichtung (33) zu kommunizieren, die in dem Fahrzeug vorgesehen ist, und mit einer Navigationsvorrichtung mit einer Fahrzeugpositions-Identifizierungseinheit, die eine Position des Fahrzeugs identifiziert, und einer Datenbank, die eine Karte und Informationen über umgebende Einrichtungen enthält,
einer Verschmutzungs-Mitteilungs-Bestimmungseinheit, die das Vorhandensein oder das Fehlen einer Mitteilung über Verschmutzung basierend auf Positionsinformationen eines vorgegebenen Typs einer Einrichtung bestimmt, die eine vorher bestimmte Einrichtung ist, die von der Navigationsvorrichtung über die externe Kommunikationseinheit erhalten wird und in der die Verschmutzung entfernt werden kann, und auf dem Fahrzeug, wobei
wenn durch die Ablagerungs-Diagnoseeinheit festgestellt wurde, dass ein Verschmutzungsgrad der Linse der Kamera oder des Schutzelements der Linse auf einem vorgegebenen Wert oder höher ist, und durch die Verschmutzungs-Mitteilungs-Bestimmungseinheit festgestellt wurde, dass die vorgegebene Art von Einrichtung in einem vorgegebenen Abstandsbereich von dem Fahrzeug existiert, aus der momentanen Position, die durch die Fahrzeugpositions-Identifizierungseinheit bestimmt wurde, und Informationen in der Datenbank, die fahrzeugmontierte Bildgebungsvorrichtung einem Benutzer mitteilt, dass die Linse der Kamera oder das Schutzelement der Linse verschmutzt ist, und auch einen Kandidaten der vorgegebenen Art von Einrichtung über die Anzeigevorrichtung und/oder die Lautsprechervorrichtung, die in dem Fahrzeug vorgesehen ist.

2. Fahrzeugmontierte Bildgebungsvorrichtung nach Anspruch 1, wobei die vorgegebene Art von Einrichtung eine Servicestation oder ein Parkplatz ist, wo eine Versorgungsquelle aufgefüllt werden kann, die eine Antriebsquelle des Fahrzeugs zugeführt wird.

3. Fahrzeugmontierte Bildgebungsvorrichtung nach Anspruch 1 oder 2, wobei die Ablagerungs-Diagnoseeinheit Bilder vergleicht, die in beiden Zuständen eines Zustands, in dem ein Zündungsschalter des Fahrzeugs in einem Aus-Zustand ist, und einem Zustand, bei dem der Zündungsschalter in einem Ein-Zustand ist, nachdem der Benutzer auf die Verschmutzung der Linse aufmerksam gemacht wurde, bestimmt, ob die Verschmutzung der Linse entfernt wurde oder nicht, und wenn die Verschmutzung der Linse nicht entfernt wurde, den Benutzer erneut über die Verschmutzung der Linse informiert.

4. Fahrzeugmontierte Bildgebungsvorrichtung nach Anspruch 3, wobei die externe Kommunikationseinheit ausgebildet ist, um im Gebrauch mit Beleuchtungen zu kommunizieren, die in dem Fahrzeug vorgesehen sind, und wobei die Ablagerungs-Diagnoseeinheit sequenziell ein Bild, das direkt nachdem das Fahrzeug angehalten wurde, aufgenommen wurde, und ein Bild vergleicht, das kurzzeitig nachdem der Benutzer über die Verschmutzung der Linse informiert wurde, aufgenommen wurde, und wenn die Verschmutzung nicht eliminiert wurde, durch die externe Kommunikationseinheit zu veranlassen, dass die Beleuchtung eingeschaltet wird oder blinkt, die in dem Fahrzeug vorgesehen ist, entsprechend einer Position, in der die Kamera montiert ist, und wenn die Verschmutzung entfernt wurde, das Licht auszuschalten.

5. Fahrzeugmontierte Bildgebungsvorrichtung nach einem der Ansprüche 1 bis 4 mit ferner einer CPU, die ausgebildet ist, um im Gebrauch zu bestimmen, ob ein Scheibenwischer für eine Windschutzscheibe in dem Fahrzeug kontinuierlich arbeitet, wobei, wenn die CPU bestimmt, das der Scheibenwischer für die Windschutzscheibe, die in dem Fahrzeug vorgesehen ist, kontinuierlich arbeitet die fahrzeugmontierte Bildgebungsvorrichtung den Benutzer nicht darüber informiert, dass die Linse oder das Schutzelement der Linse verschmutzt ist.

6. Fahrzeugmontierte Bildgebungsvorrichtung nach einem der Ansprüche 1 bis 5, wobei die fahrzeugmontierte Bildgebungsvorrichtung einen Einstellwert einer Überwachungszeitspanne, während derer die fahrzeugmontierte Bildgebungsvorrichtung die Änderung des Verschmutzunggrads überwacht, entsprechend der Art der Verschmutzung auf der Linse oder dem Schutzelement der Linse ändert.

7. Fahrzeugmontierte Bildgebungsvorrichtung nach Anspruch 6, wobei der Einstellwert der Überwachungszeitspanne auf eine kurze Zeitspanne eingestellt wird, wenn die Art der Verschmutzung eine Ablagerung mit geringer Durchlässigkeit ist, und auf eine lange Zeitspanne eingestellt wird, wenn die Art der Verschmutzung eine Ablagerung mit hoher Durchlässigkeit ist oder eine Eintrübung ist.

## Revendications

1. Dispositif d'imagerie monté sur véhicule (10) comprenant :
une unité de diagnostic d'accumulation (22) qui diagnostique un état de contamination qui s'est accumulée sur une lentille d'une caméra qui est montée sur un extérieur d'un véhicule, ou sur un élément protecteur de la lentille ; et
une unité de communication externe (26) qui est configurée pour communiquer à l'usage avec un dispositif d'affichage (23) et/ou un dispositif à haut-parleurs (33) disposés dans le véhicule et avec un dispositif de navigation ayant une unité d'identification de position de véhicule qui identifie une position du véhicule et une base de données contenant une carte et des informations sur des installations périphériques ;
une unité de détermination d'avertissement de contamination (23) qui détermine la présence ou l'absence d'un avertissement de contamination, sur la base d'informations de position sur un type prédéterminé d'installation qui est une installation déterminée antérieurement qui est obtenue à partir du dispositif de navigation par le biais de l'unité de communication externe, et dans laquelle la contamination peut être éliminée, et sur le véhicule, dans lequel
lorsque l'unité de diagnostic d'accumulation a déterminé qu'un niveau de contamination de la lentille de la caméra ou de l'élément protecteur de la lentille est une valeur prédéterminée ou supérieure, et lorsque l'unité de détermination d'avertissement de contamination a déterminé que le type prédéterminé d'installation existe dans une plage de distances prédéterminée depuis le véhicule, à partir d'une position actuelle identifiée par l'unité d'identification de position de véhicule et d'informations dans la base de données, le dispositif d'imagerie monté sur véhicule avertit un utilisateur que la lentille de la caméra ou l'élément protecteur de la lentille est contaminé, et affiche également un candidat du type prédéterminé d'installation, par le dispositif d'affichage et/ou le dispositif à haut-parleurs disposés dans le véhicule.

2. Dispositif d'imagerie monté sur véhicule selon la revendication 1, dans lequel le type prédéterminé de l'installation est une station-service ou un parc de stationnement dans lequel une source d'alimentation qui est fournie à une source d'entraînement du véhicule peut être réapprovisionnée.

3. Dispositif d'imagerie monté sur véhicule selon la revendication 1 ou 2, dans lequel l'unité de diagnostic d'accumulation compare des images qui ont été prises dans deux états, à savoir un état dans lequel un commutateur d'allumage du véhicule est dans un état d'arrêt et un état dans lequel le commutateur d'allumage est dans un état de marche, après que l'utilisateur a été averti de la contamination sur la lentille, détermine si la contamination sur la lentille a été éliminée ou non, et quand la contamination sur la lentille n'a pas été éliminée, avertit à nouveau l'utilisateur de la contamination sur la lentille.

4. Dispositif d'imagerie monté sur véhicule selon la revendication 3, dans lequel l'unité de communication externe est configurée pour communiquer à l'usage avec des lampes qui sont disposées dans le véhicule, et l'unité de diagnostic d'accumulation compare successivement une image qui a été prise juste après que le véhicule s'est arrêté et une image qui a été prise le plus récemment, après que l'utilisateur a été averti de la contamination sur la lentille ; et quand la contamination n'a pas été éliminée, fait s'allumer ou clignoter, par le biais de l'unité de communication externe, les lampes qui sont disposées dans le véhicule, en fonction d'une position à laquelle la caméra est montée, et quand la contamination a été éliminée, éteint les lampes.

5. Dispositif d'imagerie monté sur véhicule selon l'une quelconque des revendications 1 à 4, comprenant en outre une UC qui est configurée pour déterminer à l'usage si un essuie-glace pour un pare-brise dans le véhicule fonctionne en continu, dans lequel, quand l'UC a déterminé que l'essuie-glace pour le pare-brise disposé dans le véhicule fonctionne en continu, le dispositif d'imagerie monté sur véhicule n'avertit pas l'utilisateur que la lentille ou l'élément protecteur de la lentille est contaminé.

6. Dispositif d'imagerie monté sur véhicule selon l'une quelconque des revendications 1 à 5, le dispositif d'imagerie monté sur véhicule changeant une valeur réglée d'une durée de surveillance pendant laquelle le dispositif d'imagerie monté sur véhicule surveille la variation du niveau de contamination, en fonction du type de la contamination sur la lentille ou l'élément protecteur de la lentille.

7. Dispositif d'imagerie monté sur véhicule selon la revendication 6, dans lequel la valeur réglée de la durée de surveillance est réglée sur une courte durée quand le type de la contamination est une accumulation ayant une faible transmission, et est réglée sur une longue durée quand le type de la contamination est une accumulation ayant une forte transmission ou est trouble.
